# EUROPÄISCHE PATENTANMELDUNG

(11) **EP 2 335 959 A1**
(43) Veröffentlichungstag der Anmeldung: **22.06.2011**
(21) Anmeldenummer: 10191901.7
(22) Anmeldetag: 19.11.2010
(51) Int. Cl.: B60J 10/04, B60J 10/00, B60R 13/02

(54) **Dichtung zum Abdichten eines Fensterschachts eines Kraftfahrzeugs**

(30) Priorität: 15.12.2009 DE 102009058347
(71) Anmelder: Metzeler Automotive Profile Systems GmbH, 88131 Lindau/Bodensee (DE)
(72) Erfinder: Seidel, Ulrich, 88145 Opfenbach (DE); Fellner, Johannes, 88131, Lindau (DE)
(74) Vertreter: Schober, Christoph D.

(57) **Zusammenfassung**

Eine Dichtung (20) zum Abdichten eines Fensterschachts (12) eines Kraftfahrzeugs (10), wobei in dem Fensterschacht (12) eine Fensterscheibe (15) verfahrbar angeordnet ist und der Fensterschacht (12) wenigstens einen Flansch (13, 14) aufweist, umfasst einen Dichtungsabschnitt (21), der mit wenigstens einer Dichtlippe (22, 23) versehen ist, die an die Fensterscheibe (15) anlegbar ist. Weiterhin umfasst die Dichtung (20) einen Befestigungsabschnitt (26), der auf den Flansch (14) aufsteckbar ist, und einen Verbindungsabschnitt (40), an dem eine mit einem Befestigungselement (51) versehene Verkleidung (50) befestigbar ist. Der Verbindungsabschnitt (40) weist einen Aufnahmekanal (41) auf, der geeignet ist, das mit einem Vorsprung (52) versehene Befestigungselement (51) aufzunehmen. Der Aufnahmekanal (41) ist mit einer Hinterschneidung (42) versehen, in den zum formschlüssigen Verbinden von Verbindungsabschnitt (40) und Befestigungselement (51) der Vorsprung (52) eingreift.

## Beschreibung

Die Erfindung betrifft eine Dichtung zum Abdichten eines Fensterschachts eines Kraftfahrzeugs. In dem Fensterschacht ist eine Fensterscheibe verfahrbar angeordnet, und der Fensterschacht weist wenigstens einen Flansch auf. Die Dichtung umfasst einen Dichtungsabschnitt, der mit wenigstens einer Dichtlippe versehen ist, die an die Fensterscheibe anlegbar ist. Weiterhin umfasst die Dichtung einen Befestigungsabschnitt, der auf den Flansch aufsteckbar ist. Eine derartige Fensterschachtdichtung wird in WO 2004/056598 A1 beschrieben.

Weiterhin ist aus DE 199 35 348 A1 die Befestigung der Innenverkleidung eines Kraftfahrzeugs an einem Flansch bekannt, beispielsweise an einer B-Säule des Kraftfahrzeugs. Ein durch eine Metalleinlage verstärktes Kederprofil ist auf den Flansch aufgesteckt und mit einer Aufnahmenut versehen, die einen Randabschnitt der Innenverkleidung kraftschlüssig aufnimmt.

Der Erfindung liegt die **Aufgabe** zugrunde, eine Fensterschachtdichtung zu schaffen, die eine zuverlässige Befestigung einer Verkleidung eines Kraftfahrzeugs ermöglicht.

Diese Aufgabe wird durch eine Dichtung gemäß Anspruch 1 oder 2 und eine Dichtungsanordnung gemäß Anspruch 11 **gelöst**. Bevorzugte Ausgestaltungen der Erfindung werden in den Ansprüchen 3 bis 10 definiert.

Die erfindungsgemäße Dichtung umfasst einen Dichtungsabschnitt, der mit wenigstens einer Dichtlippe versehen ist, die an die Fensterscheibe anlegbar ist, einen Befestigungsabschnitt, der auf den Flansch aufsteckbar ist, und einen Verbindungsabschnitt. An dem Verbindungsabschnitt ist eine Verkleidung befestigbar.

In einer ersten Ausgestaltung der Erfindung weist der Verbindungsabschnitt einen Aufnahmekanal auf, der geeignet ist, ein Befestigungselement, das an der Verkleidung angeordnet ist, aufzunehmen. Der Aufnahmekanal ist zu diesem Zweck mit einer Hinterschneidung versehen, in den zum formschlüssigen Verbinden von Verbindungsabschnitt und Befestigungselement ein an dem Befestigungselement vorgesehener Vorsprung eingreift.

In einer zweiten Ausgestaltung der Erfindung ist das Befestigungselement an dem Verbindungsabschnitt und der Aufnahmekanal an der Verkleidung angeordnet. Zum formschlüssigen Verbinden von Verbindungsabschnitt und Verkleidung greift der Vorsprung des Befestigungselements in die Hinterschneidung des an der Verkleidung angeordneten Aufnahmekanals ein.

Der Erfindung liegt die Erkenntnis zugrunde, einen Formschluss zwischen Dichtung und Verkleidung vorzusehen, um eine zuverlässige Befestigung der Verkleidung an der Dichtung zu erzielen. Im Unterschied zu einem reinen Kraftschluss, wie er für die Befestigung einer Verkleidung aus DE 199 35 348 A1 bekannt ist, bietet die erfindungsgemäße Ausgestaltung den Vorteil, dass eine zuverlässige Befestigung auch dann gegeben ist, wenn die Fensterschachtdichtung und die Verkleidung einer vergleichsweise hohen Temperatur und/oder einer ungewöhnlichen Krafteinwirkung ausgesetzt sind. Grund hierfür ist vornehmlich der zwischen dem Verbindungsabschnitt und dem Befestigungselement erzeugte Formschluss, der auch dann eine wirksame Verbindung gewährleistet, wenn beispielsweise der Verbindungsabschnitt aufgrund einer Erwärmung sich ausdehnt oder an Steifigkeit verliert. Das gilt vor allem dann, wenn der Verbindungsabschnitt aus einem wärmeempfindlichen Werkstoff, wie beispielsweise Polypropylen, besteht.

Gemäß einer bevorzugten Ausführungsform ist der Aufnahmekanal derart ausgestaltet, dass er das Befestigungselement kraftschlüssig aufnimmt. Durch den hinzugefügten Kraftschluss wird die Verbindung zusätzlich verstärkt. In diesem Zusammenhang hat es sich als zweckmäßig erwiesen, den Aufnahmekanal mit wenigstens einer Haltelippe und/oder wenigstens einer Stützrippe zu versehen. Alternativ oder zusätzlich kann auch eine mechanische Hinterhakung vorgesehen sein, beispielsweise durch Ausstanzungen am Flansch. Durch diese Ausgestaltung kann der Kraftschluss zwischen Befestigungselement und Aufnahmekanal weiter erhöht werden.

In einer weiteren bevorzugten Ausgestaltung ist der Aufnahmekanal mit einer Verengung versehen, die elastisch verformbar ist. Die Verengung erhöht den Formschluss der Verbindung. Durch die elastische Verformbarkeit ist weiterhin gewährleistet, dass sich das Befestigungselement in den Aufnahmekanal einführen lässt, insbesondere dass sich der Vorsprung durch die Verengung drücken lässt. Weiterhin kann der Aufnahmekanal in eine trichterförmige Passage münden. So wird das Einführen des Befestigungselements in den Aufnahmekanal erleichtert, da sich das Befestigungselement bei Vorhandensein eines leichten Versatzes mit dem Aufnahmekanal automatisch zentral ausrichtet.

Gemäß einer bevorzugten Ausgestaltung ist der Befestigungsabschnitt im Querschnitt im Wesentlichen U-förmig und weist einen ersten Schenkel, einen zweiten Schenkel und eine den ersten Schenkel und den zweiten Schenkel miteinander verbindende Basis auf. Durch diese Ausgestaltung kann der Befestigungsabschnitt auf den Flansch aufgesteckt werden.

Bevorzugt schließen der Aufnahmekanal und der zweite Schenkel einen Winkel ein, der kleiner als 130° ist, und vorzugsweise zwischen 70° und 90° beträgt. Dadurch kann eine einfache Montage und überdies gewährleistet werden, dass beim Zusammenfügen von Verkleidung und Dichtung die Verkleidung nicht am Flansch des Kraftfahrzeugs hängen bleibt. Zudem hat es sich herausgestellt, dass ein derartiger Winkel für die bei Gebrauch an der Verkleidung angreifenden Kräfte günstig ist, um eine zuverlässige Verbindung sicherzustellen. In der alternativen Ausgestaltung der Erfindung kann das Befestigungselement und der zweite Schenkel einen Winkel einschlie-βen, der kleiner als 130° ist, und vorzugsweise zwischen 70° und 90° beträgt.

Gemäß einer weiteren bevorzugten Ausführungsform bestehen der Befestigungsabschnitt und/oder der Dichtungsabschnitt und/oder der Verbindungsabschnitt aus einem elastomeren Werkstoff, vorzugsweise aus Polypropylen, Ethylen-Propylen-Dien-Kautschuk (EPDM) oder aus einem thermoplastischen Elastomer (TPE). Diese Ausgestaltung ermöglicht es, die Dichtung durch Extrusion herzustellen. Die Dichtlippen können jedoch an die Dichtung angespritzt werden. Dem elastomeren Werkstoff können mineralische oder nachwachsende Verstärkungsstoffe beigegeben sein.

Die erfindungsgemäße Dichtungsanordnung zum Abdichten eines Fensterschachts eines Kraftfahrzeugs, wobei in dem Fensterschacht eine Fensterscheibe verfahrbar angeordnet ist und der Fensterschacht wenigstens einen Flansch aufweist, umfasst eine Verkleidung und eine Dichtung der oben genannten Art, die zumindest formschlüssig mit der Verkleidung verbunden ist.

Einzelheiten und weitere Vorteile der Erfindung ergeben sich aus der nachfolgenden Beschreibung bevorzugter Ausführungsbeispiele. In den die Ausführungsbeispiele lediglich schematisch darstellenden Zeichnungen veranschaulichen im Einzelnen:
- Fig. 1: eine perspektivische Ansicht eines Kraftfahrzeugs mit einer einen Fensterschacht aufweisenden Tür;
- Fig. 2: eine schematische Darstellung des Fensterschachts mit einer erfindungsgemäßen Dichtungsanordnung;
- Fig. 3: eine schematische Darstellung der erfindungsgemäßen Dichtungsanordnung in einer weiteren bevorzugten Ausgestaltung;
- Fig. 4: eine vergrößerte Darstellung des Befestigungselements und des Aufnahmekanals in einer anderen Ausführungsform, und
- Fig. 5: eine Ansicht einer alternativen Ausgestaltung eines Aufnahmekanals mit aufgenommenem Befestigungselement.

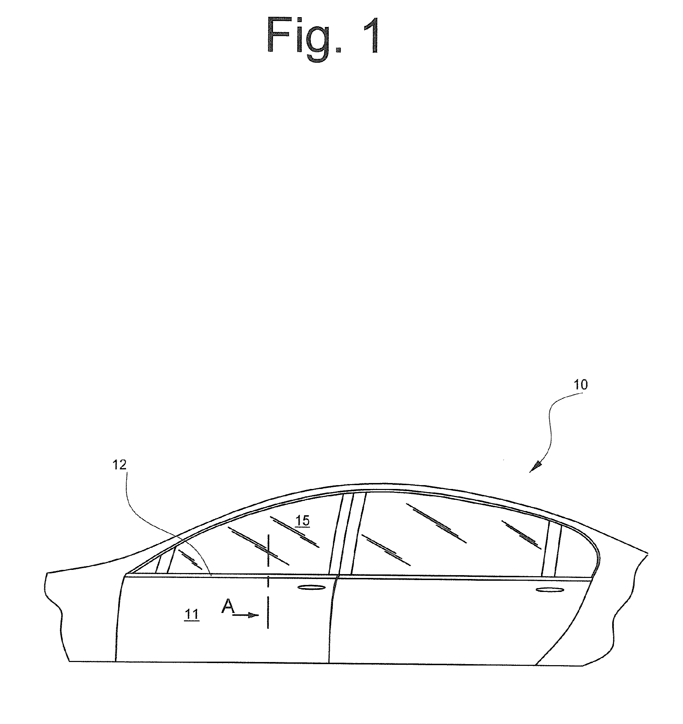

Die in Fig. 1 dargestellte Tür 11 eines Kraftfahrzeugs 10 umfasst eine Fensterscheibe 15, die in einem Fensterschacht 12 verfahrbar angeordnet ist. Der Fensterschacht 12 wird durch einen äußeren Flansch 13 und einen inneren, der Fahrgastzelle des Kraftfahrzeugs 10 zugewandten Flansch 14 gebildet.

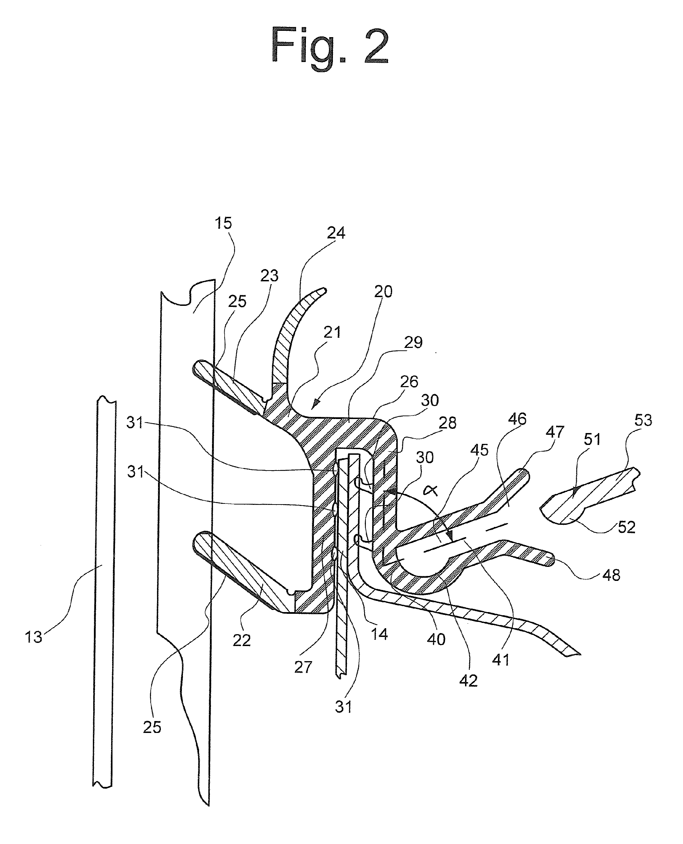

Fig. 2 zeigt eine Dichtungsanordnung, die zum Abdichten des Fensterschachts 12 dient. Die Dichtungsanordnung umfasst eine Dichtung 20, die einen Dichtungsabschnitt 21, einen Befestigungsabschnitt 26 und einen Verbindungsabschnitt 40 aufweist, sowie eine Verkleidung 50. Der Befestigungsabschnitt 26 ist im Querschnitt im Wesentlichen U-förmig und weist einen ersten Schenkel 27, einen zweiten Schenkel 28 und eine den ersten Schenkel 27 und den zweiten Schenkel 28 miteinander verbindende Basis 29 auf. Die Dichtung 20 besteht aus einem elastomeren Werkstoff, wobei der Befestigungsabschnitt 26 und der Verbindungsabschnitt 40 vorzugsweise aus Polypropylen bestehen und beispielsweise durch Extrusion hergestellt sind. Der Dichtungsabschnitt 21 hingegen ist zweckmäßigerweise an den Befestigungsabschnitt 26 angespritzt und besteht aus einem weicheren Werkstoff, um eine hohe Verformungsfähigkeit und damit eine zuverlässige Dichtwirkung sicherzustellen.

In dem dargestellten Ausführungsbeispiel weist der Dichtungsabschnitt 21 drei Dichtlippen 22, 23, 24 auf. Die Dichtlippen 22, 23 liegen an der Fensterscheibe 15 an und sind jeweils mit einer Beflockung 25 versehen. Die Dichtlippe 24 ist an der Verkleidung 50 anlegbar und dichtet einen durch die Verkleidung 50 eingeschlossenen Hohlraum ab.

Der Befestigungsabschnitt 26 ist auf den Flansch 14 aufgesteckt und befestigt die Dichtung 20 an dem Flansch 14. Am ersten Schenkel 27 sind Stützrippen 31 angeordnet. Am zweiten Schenkel 28 sind Haltelippen 30 angeordnet. Die Haltelippen 30 und Stützrippen 31 verstärken den Kraftschluss zwischen Befestigungsabschnitt 26 und Flansch 14.

An der der Fensterscheibe 15 abgewandten Seite der Dichtung 20 ist der Verbindungsabschnitt 40 angeordnet. Der Verbindungsabschnitt 40 weist einen Aufnahmekanal 41 auf, der geeignet ist, das mit einem Vorsprung 52 versehene Befestigungselement 51 aufzunehmen. Der Aufnahmekanal 41 weist eine erste Seitenwand 47 und eine zweite Seitenwand 48 auf, die eine Passage 46 definieren. Zur Befestigung der Verkleidung 50 an den Verbindungsabschnitt 40 wird das Befestigungselement 51 durch die Passage 46 in den Aufnahmekanal 41 eingeführt. Dabei wird ein am Ende eines Einsteckschwerts 53 angeordneter Vorsprung 52 durch eine Verengung 45 gedrückt, so dass diese sich elastisch verformt. Sobald der Vorsprung 52 die Hinterschneidung 42 erreicht, kann die elastisch verformte Verengung 45 in ihre ursprüngliche Position zurückschnellen. Dadurch wird ein Formschluss zwischen Aufnahmekanal 41 und Befestigungselement 51 hergestellt. Der Aufnahmekanal 41 und der zweite Schenkel 28 schließen einen Winkel αin, der kleiner als 130° ist, vorzugsweise zwischen 70° und 90° beträgt.

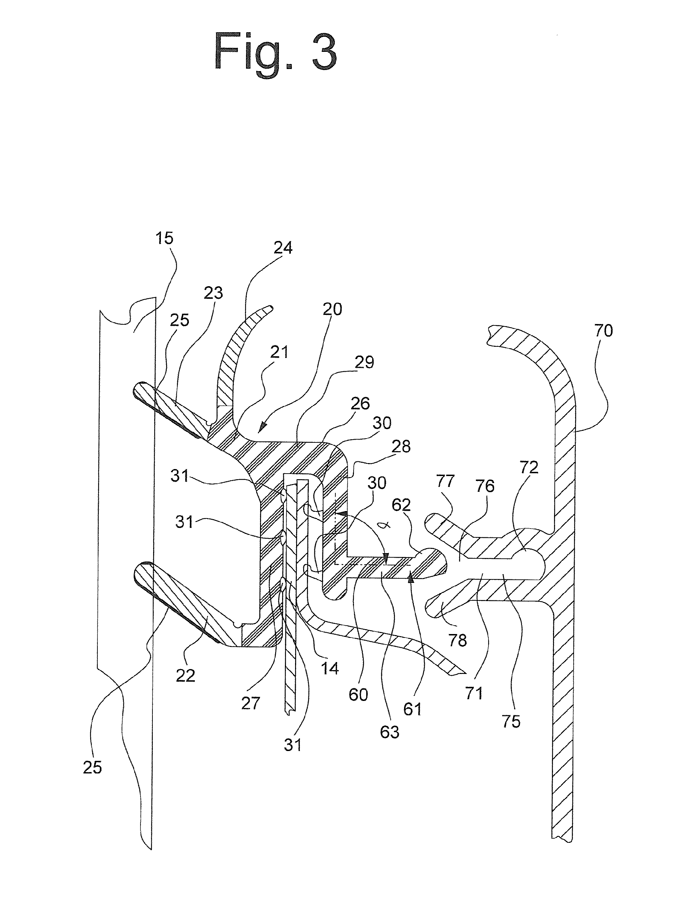

In der in Fig. 3 dargestellten Ausführungsform ist ein Verbindungsabschnitt 60 am zweiten Schenkel 28 der Dichtung 20 angeordnet. Der Verbindungsabschnitt 60 weist ein Befestigungselement 61 auf, welches mit dem zweiten Schenkel 28 einen Winkel α einschließt, der kleiner als 130° ist, vorzugsweise zwischen 70° und 90° beträgt. Das Befestigungselement 61 weist ein Einsteckschwert 63 auf, an dessen Ende ein Vorsprung 62 angeordnet ist. Auf das Befestigungselement 61 der Dichtung 20 kann die Verkleidung 70 befestigt werden. Die Verkleidung 70 ist mit einem Aufnahmekanal 71 versehen, welcher eine Hinterschneidung 72, eine Verengung 75 und eine durch eine erste Seitenwand 77 und eine zweite Seitenwand 78 definierte Passage 76 aufweist. Beim Anbringen der Verkleidung 70 an der Dichtung 20 wird der Vorsprung 62 in die Passage 76 eingeführt. Der Vorsprung 62 weitet dann die elastisch verformbare Verengung 75 bis der Vorsprung 62 in die Hinterschneidung 72 eingreift. Dann kann die Verengung 75 in ihre ursprüngliche Position zurückspringen und einen Formschluss zwischen Aufnahmekanal 71 und Befestigungselement 61 herstellen.

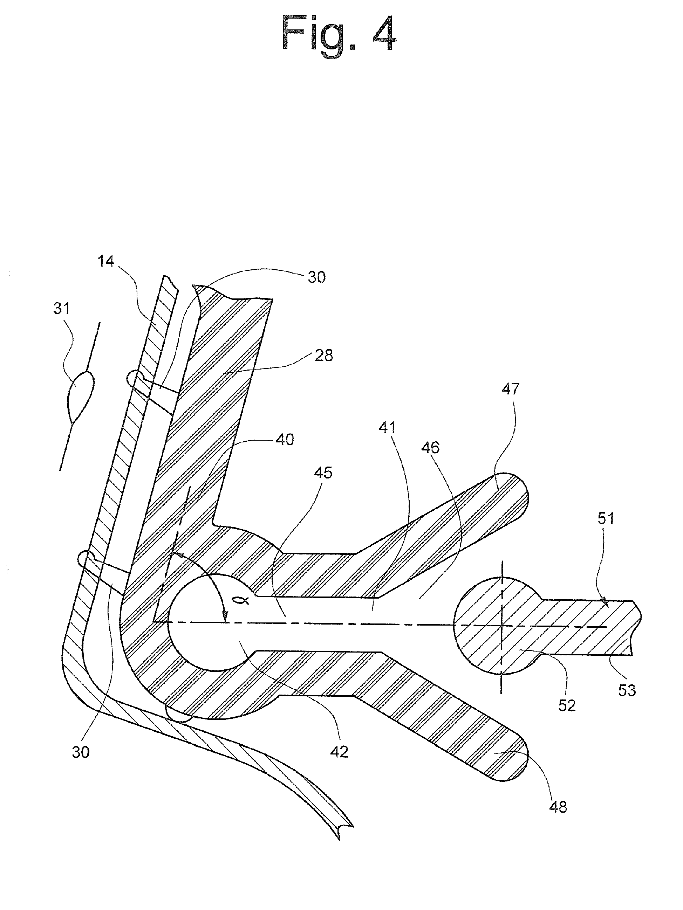

In der in Fig. 4 dargestellten Ausgestaltung ist der Vorsprung 52 des Befestigungselements 51 annähernd kreisförmig ausgebildet. Entsprechend ist die Hinterschneidung 42 des Aufnahmekanals 41 annähernd halbkreisförmig ausgebildet. Verglichen mit dem in Fig. 2 und Fig. 3 dargestellten Ausführungsbeispielen wird in dem Ausführungsbeispiel aus Fig. 4 ein höherer Formschluss erzielt, zu Lasten einer erhöhten Montagekraft.

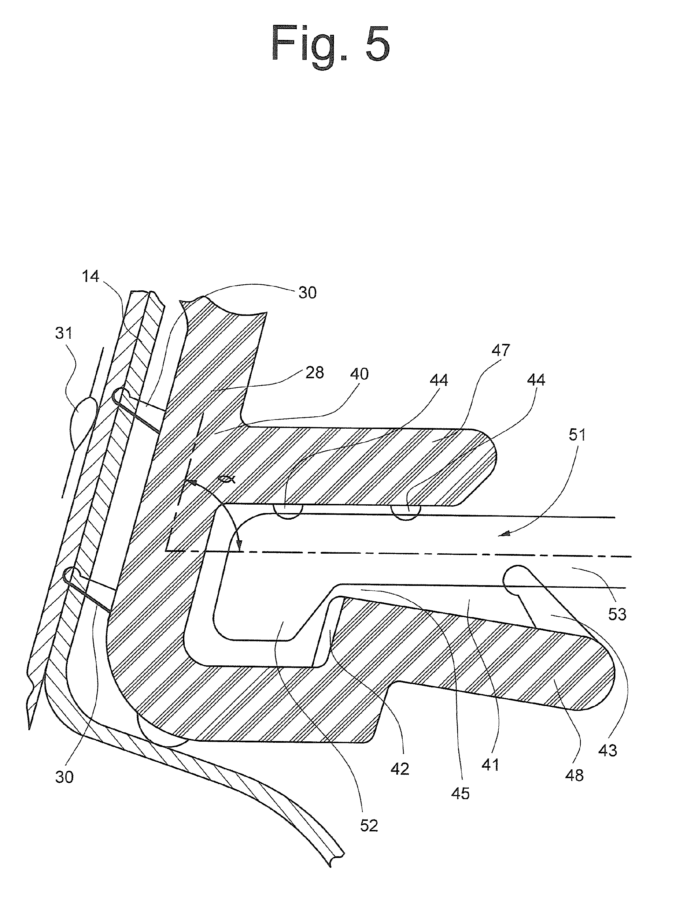

Fig. 5 zeigt eine weitere Ausgestaltung. Das Befestigungselement 40 weist im Inneren des Aufnahmekanals 41 zwei Stützrippen 44 und eine Haltelippe 43 auf. Dies erhöht den Kraftschluss zwischen Aufnahmekanal 41 und Befestigungselement 51. Das Befestigungselement 51 weist einen Vorsprung 52 auf, der hakenförmig ausgebildet ist.

### Bezugszeichenliste

- 10: Kraftfahrzeug
- 11: Tür
- 12: Fensterschacht
- 13: äußeren Flansch
- 14: inneren Flansch
- 15: Fensterscheibe

- 20: Dichtung
- 21: Dichtungsabschnitt
- 22: Dichtlippe
- 23: Dichtlippe
- 24: Dichtlippe
- 25: Beflockung
- 26: Befestigungsabschnitt
- 27: erster Schenkel
- 28: zweiter Schenkel
- 29: Basis
- 30: Haltelippe
- 31: Stützrippe

- 40: Verbindungsabschnitt
- 41: Aufnahmekanal
- 42: Hinterschneidung
- 43: Haltelippe
- 44: Stützrippe
- 45: Verengung
- 46: Passage
- 47: erste Seitenwand
- 48: zweite Seitenwand

- 50: Verkleidung
- 51: Befestigungselement
- 52: Vorsprung
- 53: Einsteckschwert

- 60: Verbindungsabschnitt
- 61: Befestigungselement
- 62: Vorsprung
- 63: Einsteckschwert

- 70: Verkleidung
- 71: Aufnahmekanal
- 72: Hinterschneidung
- 75: Verengung
- 76: Passage
- 77: erste Seitenwand
- 78: zweite Seitenwand

- α: Winkel

## Patentansprüche

1. Dichtung zum Abdichten eines Fensterschachts (12) eines Kraftfahrzeugs (10), wobei in dem Fensterschacht (12) eine Fensterscheibe (15) verfahrbar angeordnet ist und der Fensterschacht (12) wenigstens einen Flansch (13, 14) aufweist, umfassend:
einen Dichtungsabschnitt (21), der mit wenigstens einer Dichtlippe (22, 23) versehen ist, die an die Fensterscheibe (15) anlegbar ist;
einen Befestigungsabschnitt (26), der auf den Flansch (14) aufsteckbar ist, und
einen Verbindungsabschnitt (40), an dem eine mit einem Befestigungselement (51) versehene Verkleidung (50) befestigbar ist;
wobei der Verbindungsabschnitt (40) einen Aufnahmekanal (41) aufweist, der geeignet ist, das mit einem Vorsprung (52) versehene Befestigungselement (51) aufzunehmen, und
wobei der Aufnahmekanal (41) mit einer Hinterschneidung (42) versehen ist, in den zum formschlüssigen Verbinden von Verbindungsabschnitt (40) und Befestigungselement (51) der Vorsprung (52) eingreift.

2. Dichtung zum Abdichten eines Fensterschachts (12) eines Kraftfahrzeugs (10), wobei in dem Fensterschacht (12) eine Fensterscheibe (15) verfahrbar angeordnet ist und der Fensterschacht (12) wenigstens einen Flansch (13, 14) aufweist, umfassend:
einen Dichtungsabschnitt (21), der mit wenigstens einer Dichtlippe (22, 23) versehen ist, die an die Fensterscheibe (15) anlegbar ist;
einen Befestigungsabschnitt (26), der auf den Flansch (14) aufsteckbar ist, und
einen Verbindungsabschnitt (60), an dem eine mit einem Aufnahmekanal (71) versehene Verkleidung (70) befestigbar ist;
wobei der Verbindungsabschnitt (60) ein Befestigungselement (61) aufweist, das geeignet ist, in den mit einer Hinterschneidung (72) versehenen Aufnahmekanal (71) einzugreifen, und
wobei das Befestigungselement (61) mit einem Vorsprung (62) versehen ist, der zum formschlüssigen Verbinden von Verbindungsabschnitt (60) und Aufnahmekanal (71) in die Hinterschneidung (72) eingreift.

3. Dichtung nach Anspruch 1 oder 2, **dadurch gekennzeichnet, dass** der Aufnahmekanal (41; 71) geeignet ist, das Befestigungselement (51; 61 ) kraftschlüssig aufzunehmen.

4. Dichtung nach Anspruch 3, **dadurch gekennzeichnet, dass** der Aufnahmekanal (41) mit wenigstens einer Haltelippe (43) und/oder wenigstens einer Stützrippe (44) versehen ist.

5. Dichtung nach einem der Ansprüche 1 bis 4, **dadurch gekennzeichnet, dass** der Aufnahmekanal (41; 71) mit einer Verengung (45; 75) versehen ist, die elastisch verformbar ist.

6. Dichtung nach einem der Ansprüche 1 bis 5, **dadurch gekennzeichnet, dass** der Aufnahmekanal (41; 71) in einer trichterförmigen Passage (46; 76) mündet.

7. Dichtung nach einem der Ansprüche 1 bis 6, **dadurch gekennzeichnet, dass** der Befestigungsabschnitt (26) im Querschnitt im wesentlichen U-förmig ist und einen ersten Schenkel (27), einen zweiten Schenkel (28) und eine den ersten Schenkel (27) und den zweiten Schenkel (28) miteinander verbindende Basis (29) aufweist.

8. Dichtung nach Anspruch 7, **dadurch gekennzeichnet, dass** der Aufnahmekanal (41) und der zweite Schenkel (28) einen Winkel (α) einschlie-βen, der kleiner als 130° ist, vorzugsweise zwischen 70° und 90° beträgt.

9. Dichtung nach Anspruch 7, **dadurch gekennzeichnet, dass** das Befestigungselement (61) und der zweite Schenkel (28) einen Winkel (α) einschließen, der kleiner als 130° ist, vorzugsweise zwischen 70° und 90° beträgt.

10. Dichtung nach einem der Ansprüche 1 bis 9, **dadurch gekennzeichnet, dass** der Befestigungsabschnitt (26) und/oder der Dichtungsabschnitt (21) und/oder der Verbindungsabschnitt (40; 60) aus einem elastomeren Werkstoff, vorzugsweise aus Polypropylen, aus EPDM oder aus einem thermoplastischen Elastomer, bestehen.

11. Dichtungsanordnung zum Abdichten eines Fensterschachts (12) eines Kraftfahrzeugs (10), wobei in dem Fensterschacht (12) eine Fensterscheibe (15) verfahrbar angeordnet ist und der Fensterschacht (12) wenigstens einen Flansch (13, 14) aufweist, umfassend:
eine Verkleidung (50; 70) und
eine Dichtung (20) nach einem der Ansprüche 1 bis 10;
wobei die Dichtung (20) zumindest formschlüssig mit der Verkleidung (50; 70) verbunden ist.
